(19) Europäisches Patentamt
European Patent Office
Office européen des brevets

(11) Veröffentlichungsnummer : **0 084 784**
**B1**

(12) **EUROPÄISCHE PATENTSCHRIFT**

(45) Veröffentlichungstag der Patentschrift : **05.06.85**

(51) Int. Cl.⁴ : **C 07 C 93/16**, C 07 C125/06, C 08 K 5/18

(21) Anmeldenummer : **83100110.2**

(22) Anmeldetag : **08.01.83**

(54) **Neue N,N-Bis-(Beta-hydroxyalkyl)-arylamin-Derivate, Verfahren zu ihrer Herstellung und ihre Verwendung als Härtungsbeschleuniger.**

(30) Priorität : **23.01.82 DE 3202090**

(43) Veröffentlichungstag der Anmeldung : **03.08.83 Patentblatt 83/31**

(45) Bekanntmachung des Hinweises auf die Patenterteilung : **05.06.85 Patentblatt 85/23**

(84) Benannte Vertragsstaaten : **AT CH DE FR GB IT LI NL SE**

(56) Entgegenhaltungen :
**DE-A- 1 943 954**
**DE-B- 1 643 972**
**FR-A- 2 212 327**

(73) Patentinhaber : **BAYER AG**
**Konzernverwaltung RP Patentabteilung**
**D-5090 Leverkusen 1 Bayerwerk (DE)**

(72) Erfinder : **Eimers, Erich, Dr.**
**Kreuzbergstrasse 136**
**D-4150 Krefeld (DE)**
Erfinder : **Margotte, Dieter, Dr.**
**Wedelstrasse 48**
**D-4150 Krefeld (DE)**
Erfinder : **Dhein, Rolf, Dr.**
**Deswatinesstrasse 30**
**D-4150 Krefeld (DE)**
Erfinder : **Kraft, Klaus, Dr.**
**Doerperhofstrasse 15**
**D-4150 Krefeld (DE)**
Erfinder : **Klöker, Werner, Prof. Dr.**
**Deswatinesstrasse 26**
**D-4150 Krefeld (DE)**

**EP 0 084 784 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft N,N-Bis-(β-hydroxyalkyl)-arylamin-Derivate, ein Verfahren zu ihrer Herstellung durch Umsetzung von primären Arylaminen in erster Stufe mit bestimmten Bisepoxiden und in zweiter Stufe mit Monoepoxiden sowie die Verwendung dieser neuen Derivate als Härtungsbeschleuniger für ethylenisch ungesättigte kalt (d. h. bei Raumtemperatur ohne Wärmezufuhr von außen) härtbare Harze (wie Acrylate, Methacrylate und ungesättigte Polyesterharze), die sich z. B. zu Spachtel- oder Zahnfüllmassen verarbeiten lassen.

Es ist bekannt, Formmassen auf der Grundlage kalt härtbarer Polyestergießharze unter Verwendung von N,N-Dialkylarylaminen als Polymerisationsbeschleuniger auszuhärten (US-PS 2 480 928). Es ist auch bekannt, ungesättigte Polyester unter Einbau von N,N-Bis-(β-hydroxyalkyl)-arylaminen herzustellen und Formmassen auf dieser Grundlage in Gegenwart von Diacylperoxiden in der Kälte auszuhärten (DE-PS 919 431). Es ist weiterhin bekannt, N,N-Bis-(β-hydroxyalkyl)-arylamine mit Dicarbonsäuren zu einem Polyester oder mit Diisocyanaten zu einem Polyurethan umzusetzen und die resultierenden Produkte ungesättigten Polyesterharzmassen als Härtungsbeschleuniger zuzusetzen (DE-OS 1 943 954, DE-PS 1 643 972).

Die Verwendung der Amine der US-PS 2 480 928 oder anderer monomolekularer tertiärer Amine führt zu toxikologischen Komplikationen, da nämlich diese Amine mit dem Harz nicht reagieren, können sie sowohl vor als auch nach der Härtung migrieren bzw. extrahiert werden. Die Verwendung solcher kalt härtbaren Systeme in der Lebensmittelverpackung oder in der medizinischen Technik wird dadurch erschwert, wenn nicht unmöglich gemacht.

Die Aminbeschleuniger gemäß den oben erwähnten DE-PS 919 431, DE-PS 16 43 972 und DE-OS 19 43 954 sind zwar nicht flüchtig und können nicht migrieren; allerdings verringert sich die Reaktivität dieser hochmolekularen Aminbeschleuniger gegenüber den Ausgangssubstanzen, dem N,N-Bis-(β-hydroxyalkyl)-arylamin, proportional dem Kondensationsgrad der resultierenden Aminester. Die Schleifbarkeit der mit derartigen Aminesterkondensaten beschleunigten und ausgehärteten Polyesterharzmassen ist relativ schlecht.

Aufgabe der Erfindung war es, Beschleuniger bereitzustellen, die die oben geschilderten Nachteile nicht aufweisen.

Gegenstand der Erfindung sind Verbindungen der Formel

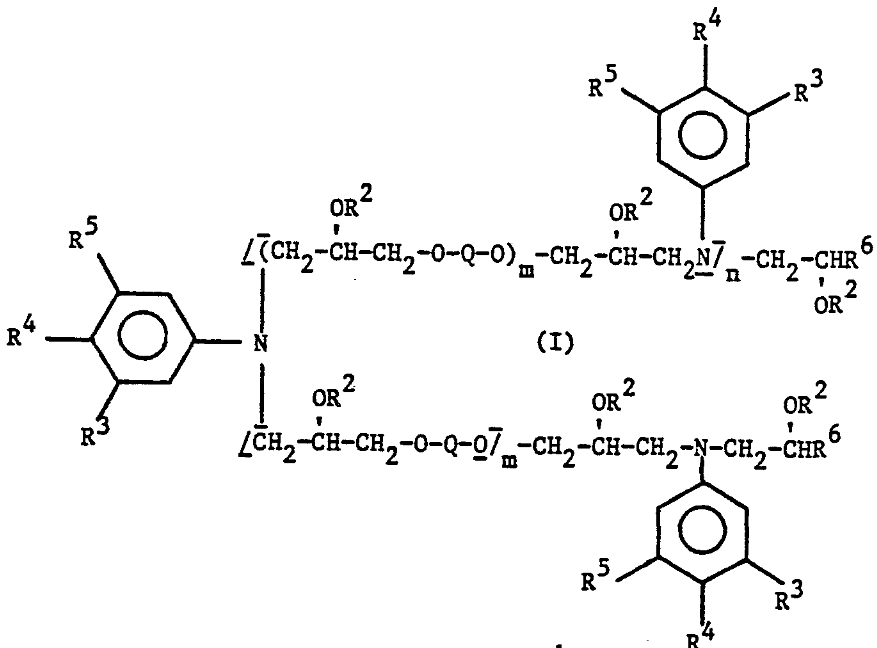

(I)

worin

Q 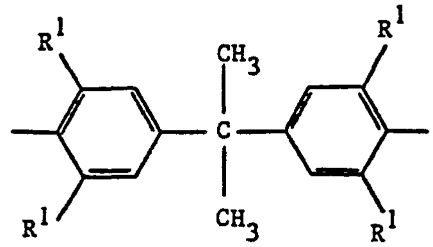 oder

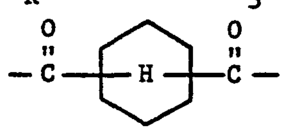 ,

$R^1$ Wasserstoff oder Methyl,

$R^2$ N-$C_1$-$C_{18}$-Alkylcarbamoyl, N-$C_6$-$C_{12}$-Arylcarbamoyl, den um die Hydroxylgruppe verminderten Rest einer gegebenenfalls durch Chlor oder $C_1$-$C_4$-Alkyl substituierten aliphatischen gesättigten oder $C_1$-$C_4$-Alkyl substituierten aliphatischen gesättigten oder ein- bis dreifach ungesättigten, einer cycloaliphatischen, araliphatischen, heterocyclischen oder aromatischen Carbonsäure mit bis zu 21 C-Atomen; vorzugsweise Wasserstoff,

$R^3$ bis $R^5$ Wasserstoff, $C_1$-$C_{18}$-Alkyl, $C_5$-$C_8$-Cycloalkyl, $C_5$-$C_{14}$-Aryl, Fluor, Chlor, Brom, Jod, und im Falle $R^3 = R^5 = H$ $R^4$ auch 2-Phenylpropyl oder 2-(4'-N,N-Dimethylaminophenyl)-2-propyl,

$R^6$ Wasserstoff, $C_1$-$C_{18}$-Alkyl, $C_6$-$C_{12}$-Aryl, Hydroxymethyl, Chlormethyl, $C_1$-$C_6$-Alkoxymethyl, $C_6$-$C_{12}$-Aryloxymethyl, $C_2$-$C_6$-Acyloxymethyl, vorzugsweise Wasserstoff und Methyl,

m eine Zahl von 1 bis 3, vorzugsweise von 1 bis 2,

n Null oder eine Zahl von 0 bis 3, vorzugsweise Null oder eine Zahl von 0 bis 1,

m + n eine Zahl von 1 bis 5, vorzugsweise von 1 bis 2,

bedeuten mit der Maßgabe, daß mindestens einer der Reste $R^3$, $R^4$, $R^5$ ein Alkylrest sein muß, sofern ein anderer (der Reste $R^3$, $R^4$, $R^5$) ein Halogenrest ist.

Weiterer Gegenstand der Erfindung ist ein Verfahren zur Herstellung der Verbindung I, dadurch gekennzeichnet, daß man in erster Stufe ein Anilin der Formel

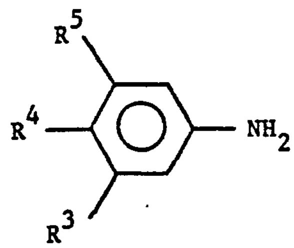

(II)

mit einem Diepoxid der Formel

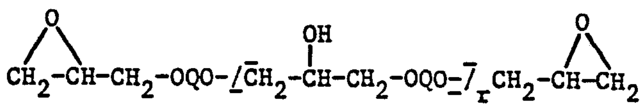

(III)

wobei $r = m - 1$ gilt,

in solchen Mengen, daß das molare Verhältnis II/III 1.25 bis 2, vorzugsweise 1.5 bis 2, beträgt, bei Temperaturen von 100 bis 250, vorzugsweise von 150 bis 210 °C umsetzt, das erhaltene Reaktionsprodukt bei Temperaturen von 90 bis 180, vorzugsweise von 110 bis 160 °C mit einem Oxiran der Formel

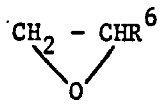

(IV)

oder bei Temperaturen von 160 bis 250, vorzugsweise 180 bis 220 °C mit einem Alkylencarbonat der Formel

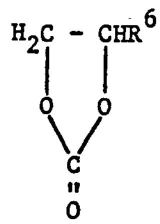

(V)

in solchen Mengenverhältnissen reagieren läßt, daß nach beendeter Reaktion mindestens 90 % aller Amin-Stickstoffatome tertiär gebunden sind, und gegebenenfalls anschließend die freien Hydroxylgruppen des so erhaltenen Produktes ($R^2 = H$) mit einem Isocyanat der Formel

$$R^{2'}NCO \qquad (VI)$$

worin

$R^{2'}$ $C_1$-$C_{18}$ Alkyl oder $C_6$-$C_{12}$ Aryl bedeutet,

bei Temperaturen von 20 bis 120, vorzugsweise von 60 bis 100 °C oder mit einer Monocarbonsäure der Formel

$R^{2''}COOH$ (VIII)

worin

$R^{2''}$ einen gegebenenfalls durch Chlor oder $C_1$-$C_4$-Alkyl substituierten aliphatischen gesättigten oder ein- bis dreifach ungesättigten, cycloaliphatischen, araliphatischen, heterocyclischen oder aromatischen Rest mit bis zu 20 C-Atomen bedeutet,

oder ihrem veresterungsfähigen Derivat bei Temperaturen von 150 bis 250, vorzugsweise von 180 bis 210 °C ganz oder teilweise urethanisiert bzw. verestert.

Nach einer bevorzugten Ausführungsform wird das Diepoxid III in das auf 150 bis 250, vorzugsweise 180 bis 210 °C vorerhitzte Anilin II etwa in dem Maße, wie es sich umsetzt, eingebracht.

Die Umsetzungen der Diepoxide III und der Oxirane IV bzw. der Alkylencarbonate V können durch Oxalkylierungskatalysatoren, wie z. B. tertiäre aliphatische Amine, Phosphine, Ammonium- und Phosphoniumsalze, Erdalkali- und Alkalimetalle, -hydroxyde, -salze und -alkoholate beschleunigt werden.

Die Abspaltung von Kohlendioxid aus den Alkylencarbonaten V läßt sich z. B. durch Alkalimetalle, Alkalihydroxide, -alkoholate, -carbonate und -borate katalysieren.

Weiterer Gegenstand der Erfindung ist schließlich die Verwendung der Verbindung I als Härtungsbeschleuniger für ethylenisch ungesättigte mit Diacylperoxiden kalt härtbare Harze. Zu diesem Zweck werden die Verbindungen I vorzugsweise in einer Konzentration entsprechend 0,008 bis 0,4, insbesondere 0,04 bis 0,2 Gew.-% tertiären Aminstickstoffs der Verbindungen I, bezogen auf zu härtendes Harz, eingesetzt.

Bevorzugte Aniline II für die Herstellung der Verbindungen I sind z. B. Anilin, m-Toluidin, p-Toluidin, 3-Chlor-4-methylanilin, 4-Chlor-3-methylanilin, 3,4-Dimethylanilin, p-Cyclohexylanilin, p-tert.-Butylanilin, p-Phenylanilin, p-2'-Phenylpropylanilin, 3,5-Dimethylanilin, 3,4,5-Trimethylanilin, 3,5-Dichlor-4-methylanilin, 4-Methyl-3-bromanilin, 2-(4'-N,N-Dimethylaminophenyl)-2-(4-aminophenyl)-propan, α-Naphthylamin, β-Naphthylamin, Aminoanthracen und deren Mischungen.

Bevorzugte Diepoxidverbindungen III für die Herstellung der Verbindungen I sind Bisphenolbisglycidylether und Cyclohexandicarbonsäurebisglycidylester mit Epoxidäquivalentgewichten von 142 bis 400, vorzugsweise von 170 bis 200.

Bevorzugte Oxirane IV für die Herstellung der Verbindungen I sind z. B. Ethylenoxid, 1,2-Propylenoxid, 1,2-Butylenoxid, 1,2-Dodecylenoxid, Phenylglycidylether, p-Kresylglycidylether, m-Kresylglycidylether, o-Kresylglycidylether, Benzoesäureglycidylether, Styroloxid, Glycid, Epichlorhydrin.

Bevorzugte Alkylencarbonate V für die Herstellung der Verbindungen I sind z. B. Glykolcarbonat, 1,2-Propylenglykol-, 1,2-Butylenglykol-, 1-Phenoxy-2,3-propylenglykol-, 1-Chlor-2,3-propylenglykolcarbonat.

Bevorzugte Isocyanate VI für die Herstellung der Verbindungen I sind z. B. Phenylisocyanat, p-Toluylisocyanat, Norbornenisocyanat, Cyclohexylisocyanat, Methylisocyanat, β-Naphthylisocyanat, Stearylisocyanat und deren Mischungen.

Bevorzugte Monocarbonsäuren VII für die Herstellung der Verbindung I sind z. B. Capron-, Capryl-, Caprin-, Laurin-, Myristin-, Palmitin-, Stearin-, Acryl-, Metharyl-, Croton-, Sorbin-, Öl-, Linol-, Eläostearin-, Behen-, α-Chlor-propion-, β-Chlor-propion-, Zimt-, Brenzschleim-, Benzoe-, p-tert.-Benzoe-, p-Chlorbenzoe-, Tetrahydrobenzoe-, Endomethylentetrahydrobenzoe-, Norbornen-, Nikotin-, Pyrrolcarbonsäure, Abietin-, Naphthensäure und deren Mischungen.

Die auf diese Weise erhältlichen Produkte stellen im allgemeinen harte, spröde Harze dar. Zur besseren Handhabung können diese Harze — zweckmäßigerweise im Zuge des Herstellungsverfahrens — in geeigneten Lösungsmitteln oder Lösungsmittelgemischen gelöst werden. Bevorzugte derartige Lösungsmittel sind mit dem Polyester copolymerisierbare Monomere, wie Styrol, α-Methylstyrol, Ester der Methacrylsäure u. dgl. Dazu können in begrenztem Umfang, der sich nach dem anwendungstechnischen Zweck richtet, polymerisationsinerte Lösungsmittel, wie z. B. n-Butylacetat, Cyclohexanon oder Ethylenglykoldimethylether, mitverwendet werden. In dieser Form lassen sich die Beschleuniger den Harzen in jeder gewünschten Konzentration leicht zudosieren.

Mit den erfindungsgemäßen Verbindungen I härtbare Harze sind im Prinzip alle ethylenisch ungesättigten Verbindungen oder Gemische, die sich in Gegenwart von Diacylperoxiden polymerisieren lassen, vorzugsweise ungesättigte Polyesterharze und Acrylharze.

« Ungesättigte Polyesterharze » in diesem Sinne sind Mischungen von 30 bis 75 Gewichtsteilen α,β-ethylenisch ungesättigter Polyester und 70 bis 25 Gewichtsteilen damit copolymerisierbarer ungesättigter Monomerer.

Derartige α,β-ethylenisch ungesättigte Polyester sind die üblichen Polykondensationsprodukte mindestens einer α,β-ethylenisch ungesättigten Dicarbonsäure mit in der Regel 4 oder 5 C-Atomen oder deren esterbilden Derivate, gegebenenfalls in Abmischung mit bis zu 90 Mol.-%, bezogen auf die ungesättigten Säurekomponenten, mindestens einer aliphatischen gesättigten Dicarbonsäure mit 4-10 C-Atomen oder einer cycloaliphatischen, araliphatischen oder aromatischen Dicarbonsäure mit 8-10 C-Atomen oder deren esterbildenden Derivate mit mindestens einer Polyhydroxyverbindung, insbesondere Dihydroxyverbindung, mit 2-8 C-Atomen — also Polyester, wie sie z. B. bei J. R. Lawrence, « Polyester Resins », Reinhold Pulb. Corp., New York 1960, S. 18 f., und im Kunststoff-Handbuch, Bd. VIII (« Polyester »), Carl Hanser Verlag, München 1973, S. 247-312, beschrieben sind. Die Säurezahlen der Polyester sollen zwischen 1 und 100, vorzugsweise zwischen 20 und 70, die OH-Zahlen zwischen 10 und 150, vorzugsweise zwischen 20 und 100, und die als Zahlenmittel gemessenen Molekulargewichte $\bar{M}_n$

zwischen ca. 500 und 5 000, vorzugsweise zwischen ca. 1 000 und 3 000 liegen (dampfdruckosmometrisch gemessen in Dioxan und Aceton ; bei differierenden Werten wird der niedrigere als der korrekte angesehen).

Das bevorzugteste copolymerisierbare Monomere ist Styrol.

Andere bevorzugte copolymerisierbare Monomere sind im ersten Abschnitt auf Seite 11 aufgezählt.

« Acrylharze » im Sinne der Erfindung sind (Meth-)Acryloyloxygruppen enthaltende Polyester, Polyurethane, Polyepoxide, Polyole, Polyetherpolyole, wie sie beispielsweise in den DE-OS-2 053 683, 2 261 612, 2 423 354, 2 838 691 (Polyester (meth)acrylate), in den DE-OS-1 447 929, 1 916 499, 2 115 373, in den US-PS-2 958 704, 3 297 745, in der GB-PS-743 514 (Urethan (meth)acrylate), in den DE-OS-1 921 869, 2 349 979, 2 411 760, 2 429 527, in der GB-PS-1 006 587, in den US-PS-3 066 112, 3 804 735 (Epoxy (meth)acrylate), in der DE-OS-1 770 825, in den US-PS-2 101 107, 2 413 973, 3 368 900, 3 552 986, 3 558 387 (Polyol (meth)acrylate), in den DE-OS-2 651 507, 2 853 921 und in den US-PS-2 951 758, 3 380 831 (Polyetherpolyol (meth)acrylate) beschrieben sind.

Die vorgenannten « Acrylharze » können zur Viskositätserniedrigung, Reaktivitätserhöhung oder zur Erzielung spezieller Eigenschaften auch mit copolymerisierbaren olefinisch ungesättigten Monomeren, z. B. mit (Meth-)Acrylsäureestern einwertiger Alkohole, Hydroxyalkyl (meth)acrylaten, (Meth-)Acrylamiden, Styrol, α-Methylstyrol, durch Alkylgruppen kernsubstituierte Styrole, Divinylbenzol, (Meth-)Acrylnitril, Vinylchlorid, Vinylidenchlorid, Vinylethern, Vinylacetat oder deren Mischungen abgemischt werden. Natürlich ist es auch möglich, mindestens ein α,β-monoolefinisch ungesättigtes Monomeres, beispielsweise der vorstehend angegebenen Art, in Gegenwart der erfindungsgemäßen Verbindungen I zu polymerisieren.

Vor der Härtung werden den Harzen Polymerisationsinitiatoren, vorzugsweise Diacylperoxide oder Percarbonate, in Mengen von 1 bis 10 Gew.-%, bezogen auf zu polymerisierendes Harz, zugesetzt. Bevorzugte Initiatoren sind z. B. Diacetylperoxid, Dibenzoylperoxid, Di-p-chlorbenzoylperoxid, Phthaloylperoxid, Succinylperoxid, Dilauroylperoxid, Acetylcyclohexansulfonylperoxid, Isopropylpercarbonat, Cyclohexylpercarbonat und Bis-(4-tert.-butylcyclohexyl)-percarbonat.

Die zu polymerisierenden Harzmassen können die üblichen Füllstoffe, Pigmente, Stabilisatoren und auch Desinfektionsmittel enthalten. Bei Verwendung auf dem Dentalgebiet kommen sowohl organische Füllstoffe, wie pulverisierte Polyacrylate, als auch anorganische Füllstoffe, wie pulverisiertes Quarz oder Glas bzw. Siliciumdioxid oder Aluminiumoxidpulver, in Frage.

Erfindungsgemäß lassen sich alle Arten von Formteilen in der Kälte aushärten und auf den verschiedensten Gebieten der Bauindustrie, der Elektroindustrie, des Bootsbaus und in der Kraftfahrzeugindustrie einsetzen.

Zur Herstellung von Spachtelmassen werden den Polyesterharzen 50-350 Gew.-Teile, bezogen auf 100 Gew.-Teile Polyesterharz, Füllstoffe, wie Kreide, Talkum, Baryt, Aerosil, Asbestine, zugesetzt. Farbstoffe oder Pigmente können natürlich ebenfalls zugesetzt werden. Das Mischen der verschiedenen Komponenten der erfindungsgemäß herstellbaren Formmassen erfolgt zweckmäßig in Knetern, Dissolvern oder auf Walzenstühlen.

Die Spachtelmassen eignen sich z. B. zur Ausbesserung von Karosserieblechen, Kunststoffplatten und Steinplatten jeglicher Art. Bevorzugten Einsatz finden erfindungsgemäß beschleunigte Spachtelmassen auf dem Autoreparatursektor.

Die in den nachfolgenden Beispielen genannten Teile sind Gewichtsteile ; Prozentangaben beziehen sich auf das Gewicht.

## Beispiele

I. Herstellung der erfindungsgemäßen Aminbeschleuniger

### Beispiel 1 (Beschleuniger I)

214 g p-Toluidin werden unter Stickstoff auf 195 °C erhitzt. Dann werden unter Rühren 400 g eines Diglycidylethers des Bisphenols-A mit einem Epoxidäquivalentgewicht von 190 und einem Molekulargewicht von 380 innerhalb von 5 Stunden zugetropft. Die Reaktionsmischung wird noch 5 Stunden bei 180-200 °C nachgerührt und dann auf 150 °C abgekühlt. In das Reaktionsgemisch wird sodann im Laufe von 10 Stunden Ethylenoxid eingeleitet. Es werden 86 g aufgenommen. Das Reaktionsprodukt — ein bräunlich gefärbtes, bei Zimmertemperatur glashartes, sprödes Harz — wird durch Erhitzen in Styrol unter Zusatz von 0,037 5 % Toluhydrochinon zu einer viskosen Lösung mit 70 % Festgehalt gelöst.

tert. Amin-Stickstoff : 3,81 %

### Beispiel 2 (Beschleuniger II)

Anstelle des in Beispiel 1 verwendeten p-Toluidins werden 242 g 3,4-Dimethylanilin eingesetzt. Man erhält ein sprödes Harz mit einem Gehalt von 3,57 % an tert. Amin-Stickstoff.

Beispiel 3 (Beschleuniger III)

200 g des gemäß Beispiel 1 erhaltenen Harzes werden unter Zusatz von 0,1 g Toluhydrochinon in 200 g Styrol gelöst und auf 90 °C erhitzt. Dann werden unter Rühren innerhalb von 2 Stunden 131,2 g Phenylisocyanat bei 80-90 °C zugetropft. Nach 4 Stunden bei 90 °C sind die Isocyanatgruppen quantitativ umgesetzt.

Beispiel 4 (Beschleuniger IV)

Anstelle des in Beispiel 1 verwendeten p-Toluidins werden 214 g m-Toluidin eingesetzt. Man erhält ein sprödes, hartes Harz mit einem Gehalt von 3,75 % an tert. Amin-Stickstoff.

Beispiel 5 (Beschleuniger V)

214 g m-Toluidin werden unter Stickstoff auf 200 °C erhitzt. Dazu werden unter Rühren in 3 Stunden 500 g eines Diglycidylethers des Bisphenols-A mit einem Epoxidäquivalentgewicht von 190 und einem Molekulargewicht von 380 zugetropft. Das Reaktionsgemisch wird anschließend noch 5 Stunden auf 200 °C erhitzt.

Dann wird bei 150 °C im Laufe von 13 Stunden Ethylenoxid eingeleitet, wobei 70 g aufgenommen werden. Man erhält ein sprödes, hartes, braun gefärbtes Harz, welches nach Zufügen von 0,03 g Toluhydrochinon, bezogen auf 100 g Gesamtlösung, in Styrol zu einer Lösung mit 70 % Festgehalt gelöst wird.

Der Gehalt an tert. Amin-Stickstoff beträgt 3,22 % (bezogen auf lösungsmittelfreies Harz).

Beispiel 6 (Beschleuniger VI)

214 g p-Toluidin werden unter Stickstoff auf 200 °C erhitzt. Dazu läßt man innerhalb von 6 Stunden unter Rühren 400 g eines Diglycidylethers des Bisphenols-A mit einem Epoxidäquivalentgewicht von 190 und einem Molekulargewicht von 380 tropfen. Die Reaktionsmischung wird anschließend noch 5 Stunden bei 200 °C nachgerührt und dann auf 120 °C abgekühlt. Nun werden 2 g Kaliumcarbonat und 190 g Glykolcarbonat zugegeben. Das Reaktionsgemisch wird in 3 Stunden auf 180 °C hochgeheizt und 7 Stunden bei 180 °C gehalten. Dabei spalten sich 86 g Kohlendioxid ab. Es resultiert ein hartes, bräunliches Harz mit einem Gehalt von 3,13 % tert. Amin-Stickstoff.

Aminbeschleuniger zum Vergleich

A. N,N-Bis-hydroxypropyl-p-toluidin

B. Kondensationsprodukt aus 1 Mol N,N-Bis-(β-hydroxypropyl)-p-toluidin + 0,78 Mol Adipinsäure, gelöst 70 %ig in Styrol

C. Kondensationsprodukt aus 1 Mol N,N-Bis-(β-hydroxypropyl)-p-toluidin + 0,95 Mol Adipinsäure, gelöst 70 %ig in Styrol

D. N,N-Bis-(β-hydroxypropyl)-m-toluidin

E. Mischung aus 27,6 g N,N-Bis-(β-hydroxyethyl)-m-toluidin und 72,4 g Beschleuniger B.

Herstellung von ungesättigten Polyesterharzen

Polyesterharz I

Aus 89 Mol Diethylenglykol, 13 Mol Ethylenglykol und 98,1 Mol Maleinsäureanhydrid wird durch Schmelzkondensation ein Polyester hergestellt. Dabei werden gleichzeitig 42,1 Mol Dicyclopentadien addiert. Anschließend wird das Harz zu einer 63 %igen Lösung in Styrol gelöst und mit 0,04 % Chloranil und 0,01 % Kupfernaphthenat, jeweils bezogen auf das reine Polyesterharz, stabilisiert. Das erhaltenen Polyesterharz hat eine Viskosität von 480 mPas (gemessen bei 25 °C) und eine Säurezahl von 10.

Polyesterharz II

Aus 28,8 Mol Diethylenglykol, 20,6 Mol Tetrahydrophthalsäureanhydrid und 6,9 Mol Maleinsäureanhydrid wird durch Schmelzkondensation ein Polyester hergestellt. Das resultierende Harz wird in Styrol unter Zufügung von 0,024 % Toluhydrochinon, 0,0104 % Chloranil und 0,07 % Kupfernaphthenat, jeweils bezogen auf Harz-Styrollösung, auf 67 % Festgehalt verdünnt. Die erhaltene Lösung zeigt eine Säurezahl von 10 sowie eine Viskosität von 900 mPas.

Bestimmung der Reaktivität

Unter Verwendung der vorgenannten Beschleuniger werden aus dem Polyesterharz I kalthärtende

Gießharzmassen hergestellt. Der bei den angegebenen Konzentrationen gegebene Gehalt an Amin-Stickstoff in dem kalthärtenden Harz ermöglicht einen Vergleich der Reaktivität der einzelnen Beschleuniger. Die Reaktivität wird bestimmt, indem die Beschleuniger/Harzmischung bei einer Anfangstemperatur von 25 °C mit 2 % handelsüblicher Benzoylperoxid-Paste (50 % Benzoylperoxid-Gehalt) ausgehärtet wird.

Die Bestimmung von Gelzeit, Härtezeit und Maximaltemperatur erfolgt gemäß DIN 16 945.

Tabelle 1

| Beschleuniger | Konzentration (%) | N-Gehalt (%) | Härtung Gelzeit (Min.) | H.-Zeit (Min.) | T max. (°C) | extrahierbares freies Amin, bezogen auf lösungsmittelfreies Harz vor der Härtung, bestimmt durch Gaschromatographie (%) |
|---|---|---|---|---|---|---|
| A | 1,3 | 0,1 | 2,6 | 4,5 | 109 | 100 |
| B | 3,15 | 0,1 | 8,2 | 12,0 | 125 | 5,7 |
| C | 5,0 | 0,15 | 12,2 | 16,2 | 114 | 3,0 |
| D | 1,3 | 0,1 | 7 | 10,2 | 105 | 100 |
| E | 4,3 | 0,1 | 9 | 13,0 | 116 | 31,7 |
| I | 2 | 0,1 | 3,6 | 5,7 | 115 | 5,6 |
| II | 2 | 0,076 | 1,6 | 5,2 | 108 | 6 |
| III | 2 | | | | | (Derivat von I) |
| IV | 2 | 0,1 | 9 | 12,5 | 115 | 5 |
| V | 2 | 0,071 | 7,4 | 10 | 113 | 3,5 |
| VI | 2 | 0,076 | 6,5 | 9,8 | 102 | 10 |

Herstellung von Spachtelmassen

Jeweils 100 Teile von Polyesterharz I bzw. II werden mit dem jeweiligen Beschleuniger, 130 Teilen Talkum, 60 Teilen Schwerspat und 7 Teilen Titandioxid (Rutil) homogenisiert.

Alle Spachtelmassen werden mit unterschiedlichen Mengen an Beschleunigern auf eine potlife von 4-5 Min/20 °C eingestellt. Man erhält ca. 300 Teile fertiger Spachtelmasse.

Herstellung der Beschichtungen

100 g Spachtelmasse werden mit ca. 2 g einer handelsüblichen 50 %igen Benzoylperoxidpaste verrührt. Die Masse wird dann in ca. 1 mm Schichtdicke auf entfettete und geschliffene Stahlblechplatten aufgetragen und die Schleifbarkeit nach bestimmten Zeiten beurteilt.

Bestimmung der Schleifbarkeit

Die Schleifbarkeit wird nach der Peroxid-Zugabe nach unterschiedlichen Zeiten bestimmt, indem die ausgehärtete Spachtelmasse mit Schleifpapier mittlerer Körnung (80er Papier) von Hand ein und derselben Person geschliffen wird. Dabei wird sowohl die Mange an abgetragenem Spachtel, als auch der Grad der Zusetzung des Schleifpapiers beurteilt.

Im einzelnen bedeuten :

1. sehr hoher Abrieb, sehr gut schleifbar,
2. hoher Abrieb, gut schleifbar,
3. mäßiger Abrieb, mäßig schleifbar,
4. kaum Abrieb, schlecht schleifbar,
5. nicht schleifbar (Spachtel rollt auf der Schleifpapieroberfläche).

Tabelle 2

Schleifbarkeit von erfindungsgemäß hergestellten Spachtelmassen im Vergleich zu Spachtelmassen mit Beschleunigern bekannter Art.

| Zusammensetzung (Teile) | | | | | | |
|---|---|---|---|---|---|---|
| Polyesterharz I | 100 | 100 | 100 | | | |
| Polyesterharz II | | | | 100 | 100 | 100 |
| Beschleuniger B | 3,5 | | | | | |
| Beschleuniger E | | 3 | | | | 3 |
| Beschleuniger IV | | | 5 | 5 | | |
| Beschleuniger V | | | | | 5 | |
| Summe Füllstoffe | 197 | 197 | 197 | 197 | 197 | 197 |
| potlife (Min.) | 4,75 | 4,30 | 4,50 | 4,0 | 4,75 | 4,0 |
| Shore-Härte nach 10 Min. | weich | 30 | 32 | weich | weich | weich |
| " " " 1 Stunde | 76 | 77 | 80 | 68 | 67 | 65 |
| Schleifbarkeit nach 10 Min. | 5 | 3 | 2 | - | - | - |
| " 15 Min. | 3 | 2 | 1 | - | - | - |
| " 20 Min. | 3 | 1 | 1 | 2 | 2 | 3 |
| " 30 Min. | 2 | 1 | 1 | 2 | 2 | 2 |

**Patentansprüche**

1. Verbindungen der Formel

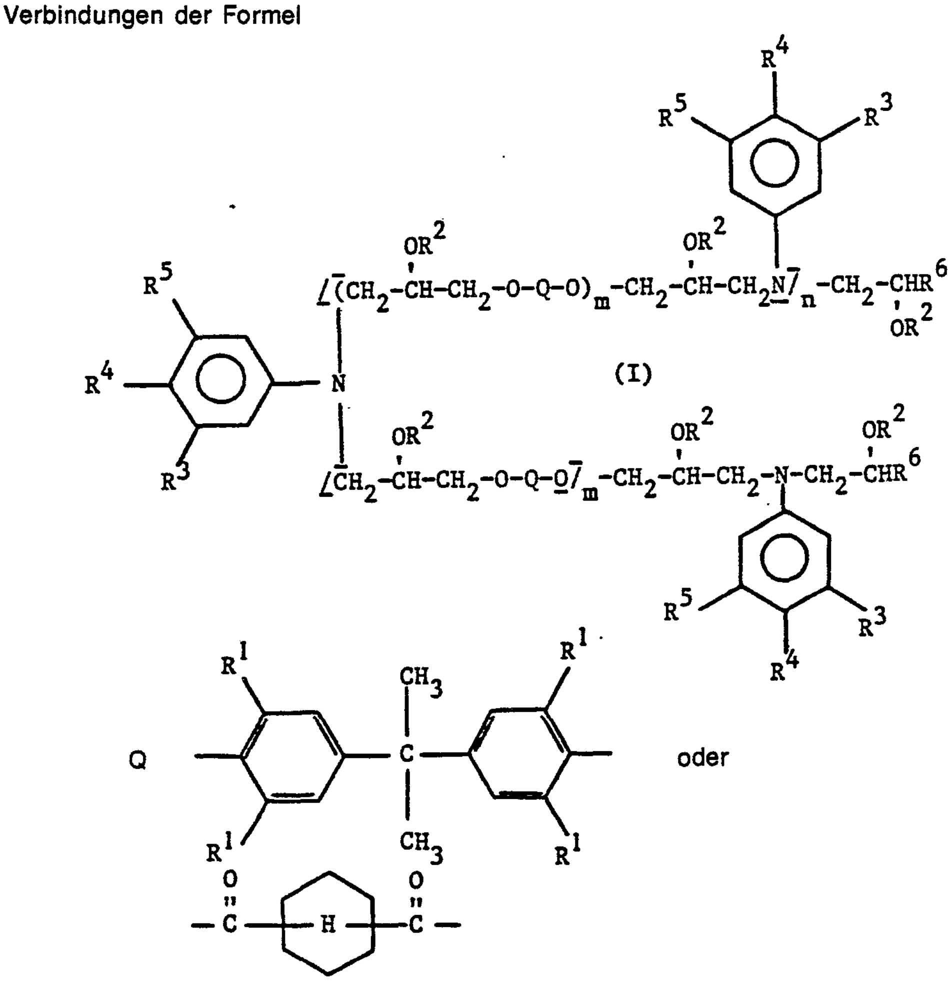

(I)

worin

Q

oder

$R^1$ Wasserstoff oder Methyl,

$R^2$ N-$C_1$-$C_{18}$-Alkylcarbamoyl, N-$C_6$-$C_{12}$-Arylcarbamoyl, den um die Hydroxylgruppe verminderten Rest einer gegebenenfalls durch Chlor oder $C_1$-$C_4$-Alkyl substituierten aliphatischen gesättigten oder ein- bis dreifach ungesättigten, einer cycloaliphatischen, araliphatischen, heterocyclischen oder aromatischen Carbonsäure mit bis zu 21 C-Atomen oder Wasserstoff,

$R^3$ bis $R^5$ Wasserstoff, $C_1$-$C_{18}$-Alkyl, $C_5$-$C_8$-Cycloalkyl, $C_5$-$C_{14}$-Aryl, Fluor, Chlor, Brom, Jod, und im Falle $R^3 = R^5 = H$ $R^4$ auch 2-Phenylpropyl oder 2-(4'-N.N-Dimethylaminophenyl)-2-propyl,

$R^6$ Wasserstoff, $C_1$-$C_{18}$-Alkyl, $C_6$-$C_{12}$-Aryl, Hydroxymethyl, Chlormethyl, $C_1$-$C_6$-Alkoxymethyl, $C_6$-$C_{12}$-Aryloxymethyl, $C_2$-$C_6$-Acyloxymethyl,

m eine Zahl von 1 bis 3,

n Null oder eine Zahl von 0 bis 3,

m + n eine Zahl von 1 bis 5

bedeuten, mit der Maßgabe, daß mindestens einer der Reste $R^3$, $R^4$, $R^5$ ein Alkylrest sein muß, sofern ein anderer der Reste $R^3$, $R^4$, $R^5$ ein Halogenrest ist.

2. Verbindungen nach Anspruch 1, dadurch gekennzeichnet, daß $R^3$ Methyl und $R^4$ und $R^5$ Wasserstoff bedeuten.

3. Verbindungen nach Anspruch 1, dadurch gekennzeichnet, daß $R^3$ Chlor oder Brom, $R^4$ Methyl und $R^5$ Wasserstoff bedeuten.

4. Verbindungen nach Ansprüchen 1-3, dadurch gekennzeichnet, daß $R^2$ Wasserstoff bedeutet.

5. Verbindungen nach Ansprüchen 1-4, dadurch gekennzeichnet, daß $R^6$ Wasserstoff oder Methyl bedeuten.

6. Verfahren zur Herstellung der Verbindungen nach Ansprüchen 1-5, dadurch gekennzeichnet, daß man in erster Stufe ein Anilin der Formel

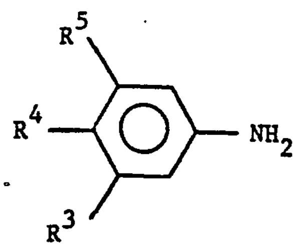

(II)

mit einem Diepoxid der Formel

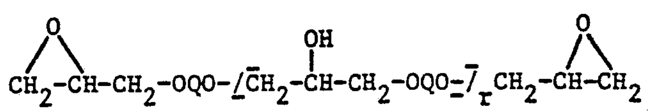

(III)

wobei r = m − 1 gilt,

in solchen Mengen, daß das molare Verhältnis II/III 1.25 bis 2 beträgt, bei Temperaturen von 100 bis 250 °C umsetzt, das erhaltene Reaktionsprodukt bei Temperaturen von 90 bis 180 °C mit einem Oxiran der Formel

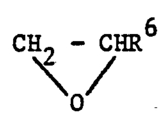

(IV)

oder bei Temperaturen von 160 bis 250 °C mit einem Alkylencarbonat der Formel

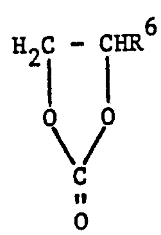

(V)

in solchen Mengenverhältnissen reagieren läßt, daß nach beendeter Reaktion mindestens 90 % aller Amin-Stickstoffatome tertiär gebunden sind, und gegebenenfalls anschließend die freien Hydroxylgruppen des so erhaltenen Produkts ($R^2 = H$) mit einem Isocyanat der Formel

$R^{2'}NCO$ (VI)

worin

$R^{2'}$ $C_1$-$C_{18}$-Alkyl oder $C_6$-$C_{12}$-Aryl bedeutet,

bei Temperaturen von 20 bis 120 °C oder mit einer Monocarbonsäure der Formel

$R^{2''}COOH$ (VII)

worin

$R^{2''}$ einen gegebenenfalls durch Chlor oder $C_1$-$C_4$-Alkyl substituierten aliphatischen gesättigten oder ein- bis dreifach ungesättigten, cycloaliphatischen, araliphatischen, heterocyclischen oder aromatischen Rest mit bis zu 20 C-Atomen bedeutet, oder ihrem veresterungsfähigen Derivat bei Temperaturen von 150 bis 250 °C ganz oder teilweise urethanisiert bzw. verestert.

7. Verfahren nach Anspruch 6, dadurch gekennzeichnet, daß das Diepoxid III in das auf 150 bis 250 °C vorerhitzte Anilin II etwa in dem Maße, wie es sich umsetzt, eingebracht wird.

8. Verwendung der Verbindungen nach Ansprüchen 1-5 als Härtungsbeschleuniger für ethylenisch ungesättigte kalt härtbare Harze, insbesondere Acrylharze und ungesättigte Polyesterharze.

## Claims

1. Compounds of the formula

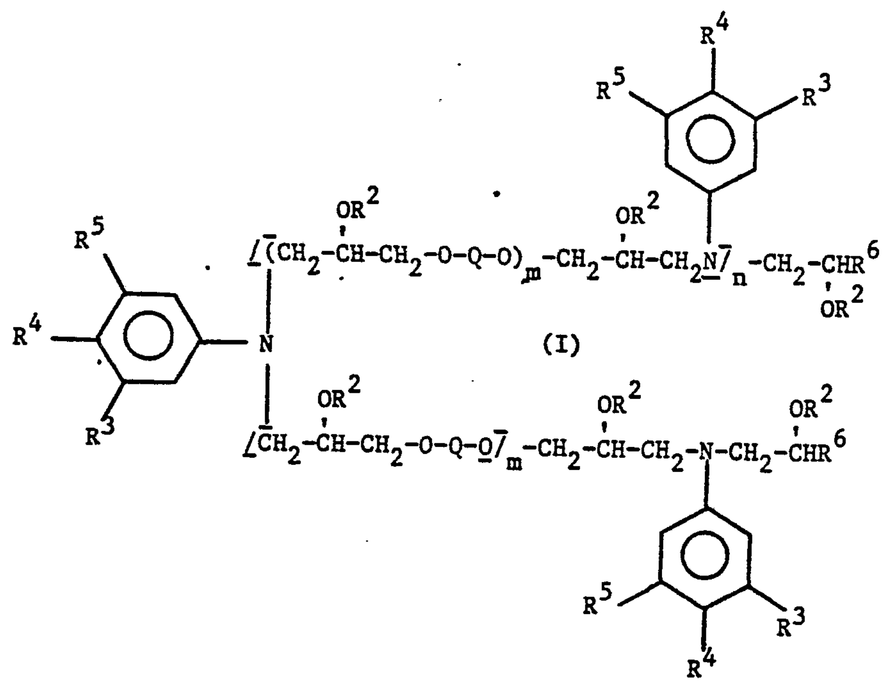

(I)

wherein

Q denotes 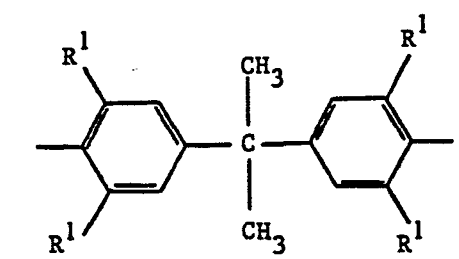 or

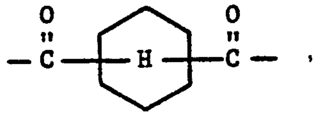 ,

$R^1$ denotes hydrogen or methyl,

$R^2$ denotes N-$C_1$-$C_{18}$-alkylcarbamoyl, N-$C_6$-$C_{12}$-arylcarbamoyl, the radical, without the hydroxyl group, of an optionally chlorine- or $C_1$-$C_4$-alkyl-substituted aliphatic, saturated or mono- to tri-unsaturated, cycloaliphatic, araliphatic, heterocyclic or aromatic carboxylic acid containing up to 21 C atoms or hydrogen,

$R^3$ to $R^5$ denote hydrogen, $C_1$-$C_{18}$-alkyl, $C_5$-$C_8$-cycloalkyl, $C_5$-$C_{14}$-aryl, fluorine, chlorine, bromine,

iodine, or in the case where $R^3 = R^5 = H$ $R^4$ also denotes 2-phenylpropyl or 2-(4'-N,N-dimethylaminophenyl)-2-propyl,

$R^6$ denotes hydrogen, $C_1$-$C_{18}$-alkyl, $C_6$-$C_{12}$-aryl, hydroxymethyl, chloromethyl, $C_1$-$C_6$-alkoxymethyl, $C_6$-$C_{12}$-aryloxymethyl or $C_2$-$C_6$-acyloxymethyl,

m denotes a number from 1 to 3,

n denotes zero or a number from 0 to 3, and

m + n denotes a number from 1 to 5,

with the proviso that at least one of the radicals $R^3$, $R^4$, and $R^5$ must be an alkyl radical if another of the radicals $R^3$, $R^4$ and $R^5$ is a halogen radical.

2. Compounds according to Claim 1, characterised in that $R^3$ denotes methyl and $R^4$ and $R^5$ denote hydrogen.

3. Compounds according to Claim 1, characterised in that $R^3$ denotes chlorine or bromine, $R^4$ denotes methyl and $R^5$ denotes hydrogen.

4. Compounds according to Claims 1-3, characterised in that $R^2$ denotes hydrogen.

5. Compounds according to Claims 1-4, characterised in that $R^6$ denotes hydrogen or methyl.

6. Process for preparing the compounds according to Claims 1-5, characterised in that, in a first stage, an aniline of the formula

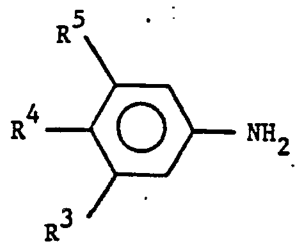

(II)

is reacted with a diepoxide of the formula

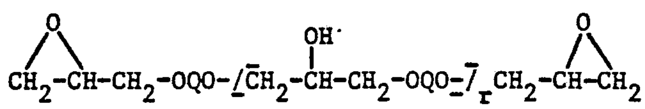

(III)

wherein

r = m − 1,

in such quantities that the molar ratio II : III is 1.25 to 2, at temperatures of 100 to 250 °C, the reaction product obtained is allowed to react at temperatures of 90 to 180 °C with an oxirane of the formula

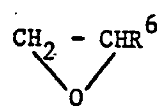

(IV)

or at temperatures of 160 to 250 °C with an alkylene carbonate of the formula

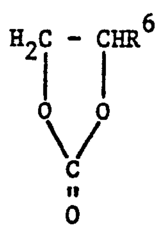

(V)

in such quantitative ratios that, at the end of the reaction at least 90 % of all the amine nitrogen atoms are bound in a tertiary form, and then, if desired, the free hydroxyl groups of the product ($R^2 = H$) thus obtained are partly or completely urethanised or esterified with an isocyanate of the formula

$$R^{2'}NCO \qquad (VI)$$

wherein

$R^{2'}$ denotes $C_1$-$C_{18}$-alkyl or $C_6$-$C_{12}$-aryl,

at temperatures of 20 to 120 °C or with a monocarboxylic acid of the formula

$R^{2''}COOH$ (VII)

wherein

$R^{2''}$ denotes an optionally chlorine- or $C_1$-$C_4$-alkyl-substituted aliphatic saturated or mono- to tri-unsaturated cycloaliphatic, araliphatic, heterocyclic or aromatic radical containing up to 20 C atoms, or an esterifiable derivative thereof, at temperatures of 150 to 250 °C.

7. Process according to Claim 6, characterised in that the diepoxide III is introduced into the aniline II, preheated to 150 to 250 °C, at a rate approximately commensurate with the rate at which it reacts.

8. Use of the compounds according to Claims 1-5 as hardening accelerators for ethylenically unsaturated cold-hardenable resins, in particular acrylic resins and unsaturated polyester resins.

**Revendications**

1. Composés de formule

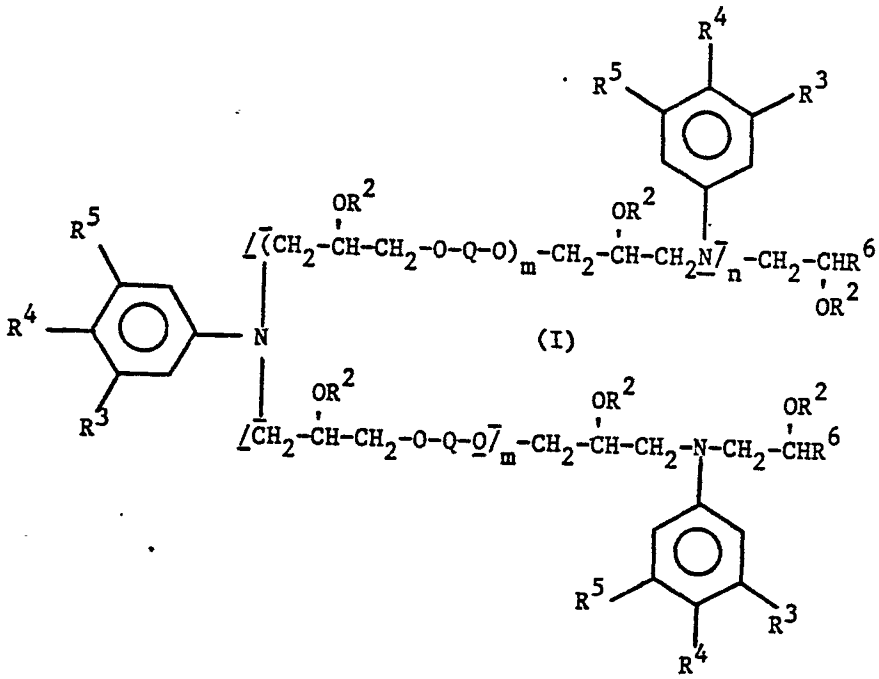

(I)

dans laquelle

Q représente

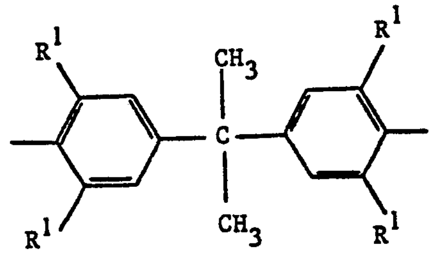

ou

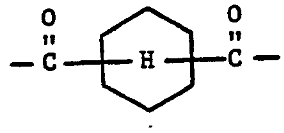

$R^1$ représente l'hydrogène ou un groupe méthyle,

$R^2$ représente un groupe N-(alkyle en $C_1$-$C_{18}$)-carbamoyle, N-(aryle en $C_6$-$C_{12}$)-carbamoyle, le reste, moins le groupe hydroxy, d'un acide carboxylique aliphatique saturé ou mono- à tri-insaturé éventuellement substitué par le chlore ou un groupe alkyle en $C_1$-$C_4$, d'un acide carboxylique cycloaliphatique, araliphatique, hétérocyclique ou aromatique contenant jusqu'à 21 atomes de carbone, ou d'hydrogène,

$R^3$ à $R^5$ représentent l'hydrogène, des groupes alkyle en $C_1$-$C_{18}$, cycloalkyle en $C_5$-$C_8$, aryle en $C_5$-

$C_{14}$, le fluor, le chlore, le brome, l'iode et dans le cas où $R^3 = R^5 = H$ $R^4$ peut également représenter un groupe 2-phénylpropyle ou 2-(4'-N,N-diméthylaminophényl)-2-propyle,

$R^6$ représente l'hydrogène, un groupe alkyle en $C_1$-$C_{18}$, aryle en $C_6$-$C_{12}$, hydroxyméthyle, chlorométhyle, (alcoxy en $C_1$-$C_6$)-méthyle, (aryloxy en $C_6$-$C_{12}$)-méthyle, acyloxyméthyle en $C_2$-$C_6$,

m est un nombre de 1 à 3,

n est égal à 0 ou représente un nombre de 0 à 3,

m + n est un nombre de 1 à 5,

étant spécifié que l'un au moins des symboles $R^3$, $R^4$, $R^5$ doit représenter un groupe alkyle lorsqu'un autre des symboles $R^3$, $R^4$, $R^5$ représente un reste halogéné.

2. Composés selon la revendication 1, caractérisés en ce que $R^3$ représente un groupe méthyle et $R^4$ et $R^5$ des atomes d'hydrogène.

3. Composés selon la revendication 1, caractérisés en ce que $R^3$ représente le chlore ou le brome, $R^4$ un groupe méthyle et $R^5$ l'hydrogène.

4. Composés selon les revendications 1 à 3, caractérisés en ce que $R^2$ représente l'hydrogène.

5. Composés selon les revendications 1 à 4, caractérisés en ce que $R^6$ représente l'hydrogène ou un groupe méthyle.

6. Procédé de préparation des composés selon les revendications 1 à 5, caractérisé en ce que l'on fait réagir dans un premier stade une aniline de formule

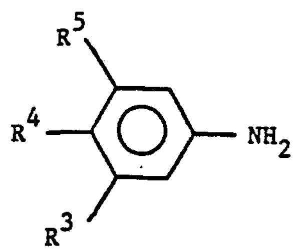

(II)

avec un diépoxyde de formule

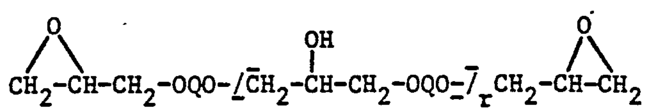

(III)

dans laquelle

r = m − 1,

en quantités correspondant à un rapport molaire II/III de 1,25 à 2, à des températures de 100 à 250 °C, on fait réagir le produit de réaction obtenu à des températures de 90 à 180 °C avec un oxiranne de formule

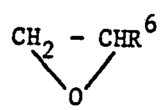

(IV)

ou à des températures de 160 à 250 °C avec un carbonate d'alkylène de formule

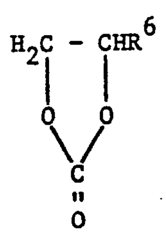

(V)

dans des proportions relatives telles que, après la réaction, au moins 90 % de tous les atomes d'azote aminés soient à liaison tertiaire, et le cas échéant on soumet ensuite les groupes hydroxy libres du produit ainsi obtenu ($R^2 = H$) à uréthannisation ou estérification totale ou partielle, respectivement à l'aide d'un isocyanate de formule

$$R^{2'}NCO \qquad (VI)$$

dans laquelle

$R^{2'}$ représente un groupe alkyle en $C_1$-$C_{18}$ ou aryle en $C_6$-$C_{12}$, à des températures de 20 à 120 °C, ou à l'aide d'un acide monocarboxylique de formule

$$R^{2''}COOH \quad (VII)$$

dans laquelle

$R^{2''}$ représente un reste aliphatique saturé ou mono- à tri-insaturé, cycloaliphatique, araliphatique, hétérocyclique ou aromatique contenant jusqu'à 20 atomes de carbone, éventuellement substitué par le chlore ou un groupe alkyle en $C_1$-$C_4$, ou un dérivé de cet acide apte à l'estérification, à des températures de 150 à 250 °C.

7. Procédé selon la revendication 6, caractérisé en ce que l'on introduit le diépoxyde III dans l'aniline II chauffée au préalable à une température de 150 à 250 °C, au fur et à mesure de sa conversion.

8. Utilisation des composés selon les revendications 1 à 5 en tant qu'accélérateurs de durcissement pour des résines à insaturation éthylénique durcissables à froid, en particulier des résines acryliques et des résines de polyesters insaturés.